# EUROPÄISCHE PATENTSCHRIFT

(11) **EP 3 366 969 B1**
(45) Veröffentlichungstag und Bekanntmachung des Hinweises auf die Patenterteilung: **01.06.2022**
(21) Anmeldenummer: 17158276.0
(22) Anmeldetag: 28.02.2017
(51) Int. Cl.: F16L 41/06

(54) **ROHRANBOHRARMATUR**
BRANCH CONNECTING DEVICE
APPAREIL DE CONNECTION DE BRANCHE

(43) Veröffentlichungstag der Anmeldung: 29.08.2018
(73) Patentinhaber: Georg Fischer Wavin AG, 8201 Schaffhausen (CH)
(72) Erfinder: Weber, Jonas, 79771 Klettgau (DE); Hüssy, Jonas, 8213 Neunkirch (CH); Hablützel, Edwin, 8200 Schaffhausen (CH)
(74) Vertreter: Fenner, Seraina

(56) Entgegenhaltungen:
- DE-A1- 19 603 254
- GB-A- 2 330 634
- US-A- 3 692 044
- US-A- 4 411 459

## Beschreibung

Die Erfindung betrifft eine Rohranbohrarmatur für ein Medium förderndes Hauptrohr vorzugsweise von Gas oder Wasser, vorzugsweise aus Kunststoff mit einer Mittelachse, wobei die Rohranbohrarmatur an einem Hauptrohr angeordnet ist, beinhaltend ein Sattelstück, ein Abgangsrohr, wobei das Abgangsrohr eine Mittelachse aufweist, einen Bohrstutzen, wobei im Bohrstutzen ein Bohrer vorzugsweise mit Gewinde zum Anbohren des Hauptrohres verschiebbar angeordnet ist und der Bohrstutzen eine Mittelachse aufweist.

Solche Rohranbohrarmaturen sind aus dem Stand der Technik bekannt und dienen dem Anschliessen einer Abzweigleitung an ein Hauptrohr. In der Regel werden solche Anbohrarmaturen auf dem höchsten Punkt des Aussenumfangs des bereits verlegten Hauptrohres platziert, wodurch die Bohrung direkt senkrecht von oben in das Hauptrohr eingebracht wird. Ein solches Anbohr-T-Stück wird in der DE 199 32 401 offenbart. Nachteilig an solchen Anbohr-T-Stücken ist der hohe Druckverlust aufgrund des hohen Strömungswiderstands, der durch die mehrfache Umlenkungen des Mediums, welches zuerst über den Anbohrstutzen 90° und dann nochmals in den Abgangsstutzen wiederum 90° umgelenkt wird, erzeugt wird.

Des Weiteren liegt ein grosser Nachteil in der Bauhöhe. Durch das Herausragen dieses Anbohr-T-Stücks bzw. dadurch dass dieses Anbohr-T über das Hauptrohr ragt besteht ein hohes Risiko, dass während der Bauphase eine Beschädigung am Anbohr-T erfolgt. Zudem neigt diese Form des Anbohr-T-Stücks durch sein Herausragen gerne zum Einfrieren bzw. das Medium in der Rohranbohrarmatur neigt zum Einfrieren. Solche Anbohrarmaturen sind in der GB 2 330 634 A und US 3,692,044 offenbart.

Die US 3 692 044 offenbart ebenfalls eine Anbohrarmatur die zwar auch bauhöhenreduziert montiert werden kann, jedoch ist hier durch den Kanal zwischen Anbohrstutzen und dem Abgangsstutzen ein mehrfaches Umlenken des Mediums nötig. Durch die mindestens 2-fache Umlenkung um 90° ist der Durchfluss stark eingeschränkt.

Die DE 196 03 254 A1 offenbart eine weitere Ausführungsform einer Anbohrarmatur mit V Anordnung, Hier wird explizit auf die geringe Bauhöhe bei einem vorgeschlagenem Montagewinkel von 90° zur Scheitelposition hingewiesen. Jedoch unterscheidet sich die Bauweise explizit von der hier vorgeschlagenen Bauweise. In der DE 196 03 254 A1 sind Bohr- und Abgangsstutzen in einer gemeinsamen durch die Rohrleitung gelegten Axialebene angeordnet. Zudem ist der Anbohrstuzten angewinkelt was zu Problemen beim Anbohren führen kann. Als weiteren Punkt ist der Schnittpunkt der Achsen zu erwähnen, der sich im Bereich des Sattels befindet und nicht wie hier vorgeschlagen im Rohrinnenbereich. Dies hat zur Folge, dass der Durchfluss stärker reduziert wird als mit der vorgeschlagenen Variante.

Die US 4 411 459 offenbart ein Anbohrfitting, bei welchem die Stutzen parallel zur Achse der Hauptleitung hintereinander angeordnet sind und eine hohe Einbauhöhe aufweist.

Es ist Aufgabe der Erfindung eine Rohranbohrarmatur vorzuschlagen, bei welcher die Bauhöhe reduziert wird, bzw. das Abgangsrohr nicht oberhalb des Hauptrohres angeordnet ist, sowie die Verringerung des Strömungswiderstandes was zur Folge die Reduzierung des Druckverlusts hat.

Die Aufgabe wird erfindungsgemäss dadurch gelöst, dass die Mittelachse des Abgangsrohres horizontal und durch das vom Bohrer im Hauptrohr durchbohrte Bohrloch verläuft und unterhalb des oberen Scheitelpunktes des Hauptrohres angeordnet ist, wobei das Abgangsrohr direkt ohne Umlenkung in das Hauptrohr eintritt bzw. anschliesst, wobei die Mittelachse des Bohrstutzens senkrecht auf die Mittelachse des Hauptrohres ausgerichtet ist, bzw. die Mittelachse des Bohrstutzens die Mittelachse des Hauptrohres im rechten Winkel schneidet.

Die Rohranbohrarmatur ist vorzugsweise aus Kunststoff ausgebildet. Sie wird an einem Hauptrohr angeordnet um darin eine Bohrung vorzusehen, um das Anschliessen einer Rohrleitung über das an der Rohranbohrarmatur angeordnete Abgangsrohr zu ermöglichen. Die Rohranbohrarmatur beinhaltet ein Sattelstück, wobei das Sattelstück das Hauptrohr bereichsweise umschliesst. Vorzugsweise beinhaltet das Sattelstück eine Heizwicklung, welche es ermöglicht durch Erwärmen das Sattelstück mit dem Hauptrohr durch Verschmelzen zu verbinden. Die Rohranbohrarmatur beinhaltet ein Abgangsrohr, dass das Anschliessen an eine abgehende Rohrleitung ermöglicht. Der an der Rohranbohrarmatur angeordnete Bohrstutzen weist einen darin angeordneten Bohrer auf, der sich entlang der Mittelachse des Bohrstutzens verschieben lässt, um die Bohrung im Hauptrohr vorzusehen.

Vorzugsweise ist die Rohranbohrarmatur mit Sattelstück, Bohrstutzen und Abgangsrohr einteilig ausgebildet. Die Mittelachse des Abgangsrohres, bzw. das Abgangsrohr verläuft horizontal, wobei die Mittelachse des Abgangsrohres unterhalb des oberen Scheitelpunktes des Hauptrohres angeordnet ist.

Somit schliesst das Abgangsrohr ohne Umlenkung direkt am Hauptrohraussenumfang an. Dies hat mehrere Vorteile gegenüber den Rohranbohrarmaturen die aus dem Stand der Technik bekannt sind. Dadurch dass das Abgangsrohr, bzw. dessen Mittellinie unterhalb des Scheitelpunkts des Hauptrohres angeordnet ist weist die Rohranbohrarmatur eine geringere Bauhöhe auf, bzw. steht nicht über das Hauptrohr hinaus, was das Risiko des Einfrierens im Winter reduziert, wie auch das Risiko der Beschädigungen während den Bauarbeiten verringert.

Des Weiteren kann auf eine Mehrfachumlenkung des Mediums verzichtet werden, da sich das Abgangsrohr direkt am Hauptrohr anschliesst, wodurch die Strömungswiderstände reduziert werden und somit auch der Druckverlust gemindert wird.

Als vorteilhafte Ausführung hat sich gezeigt, wenn die obere Scheitellinie des Abgangsrohres unterhalb des oberen Scheitelpunkts des Hauptrohres angeordnet ist. Unter dem oberen Scheitelpunkt des Hauptrohres ist der oberste Punkt am Rohrmantelaussendurchmesser zu verstehen, bei dem eine darangelegte Tangente horizontal verlaufen würde. Die obere Scheitellinie des horizontal verlaufenden Abgangsrohres verläuft entlang des Abgangsrohraussendurchmessers auf dem höchsten Punkt bzw. ebenfalls durch den Scheitelpunkt des Abgangsrohres. Diese Anordnung gewährleistet, dass das Abgangsrohr immer unterhalb des höchsten Punkts des Hauptrohraussendurchmessers verläuft.

Eine bevorzugte Anordnung des Bohrstutzens besteht darin, dass die Mittelachse des Bohrstutzens senkrecht auf die Mittelachse des Hauptrohres ausgerichtet ist, bzw. die Mittelachse des Bohrstutzens die Mittelachse des Hauptrohres im rechten Winkel schneidet. Durch die senkrechte Anordnung des Bohrstutzens auf das Hauptrohr wird ein optimales Anbohren im rechten Winkel auf das Hauptrohr ermöglicht.

Der Bohrstutzen ist vorzugsweise geneigt gegenüber dem Anbohrstutzen ausgerichtet, das heisst, die Mittellinie des Bohrstutzens verläuft in einem Winkel α < 90° zur Mittellinie des Abgangsrohres, welche horizontal ausgerichtet ist.

Bevorzugterweise verlaufen die Mittelachse des Bohrstutzens und des Abgangsstutzens in einer Ebene, wobei die Ebene rechtwinklig zur Mittelachse des Hauptrohres ausgerichtet ist, bzw. die Mittelachse des Hauptrohres senkrecht auf, bzw. durch die Ebene verläuft.

Vorteilhaft ist es, wenn die Mittelachse des Abgangsrohres durch das Bohrloch im Hauptrohr verläuft, welches mittels des Bohrers der in der Rohranbohrarmatur angeordnet ist, erzeugt wurde.

Durch die Anordnung des Bohrstutzens und dem damit entsprechend erzeugten Bohrloch und dem horizontal angeordneten Abgangsstutzen wird ein möglichst geringer Strömungswiderstand erzeugt, was wiederum nur einen geringen Druckverlust verursacht.

Das Sattelstück weist vorzugsweise eine Bohröffnung auf, die dem Bohrdurchmesser des Bohrers entspricht, bzw. leicht grösser ist. Die Mittelachse des Abgangsrohres verläuft durch die Bohröffnung, was ebenfalls für einen optimierten Strömungsverlauf sorgt.

Vorzugsweise ist der Übergang von der Bohröffnung im Sattelstück zum Innendurchmesser des Abgangsrohr abgerundet ausgebildet, um den Strömungsverlauf positiv zu beeinflussen.

Vorzugsweise verlaufen die Mittelachsen des Bohrstutzens und des Abgangsrohres in einer Ebene, wobei sie sich im Bereich des Innendurchmessers des Hauptrohres schneiden.

Vorteilhaft ist es, wenn die Dichtheit während des Anbohrens im Bohrstutzen mittels einer Dichtung gewährleistet ist, wobei die Dichtung am Innendurchmesser des Bohrstutzens angeordnet ist, vorzugsweise ist die Dichtung als O-Ring oder Profildichtung ausgebildet. Diese Dichtung stellt sicher, dass während des Anbohrens kein Medium durch den Bohrstutzen nach aussen läuft wie auch, dass kein Medium nach der Montage der Rohranbohrarmatur nach aussen dringt.

Als weitere vorteilhafte Ausgestaltung der erfindungsgemässen Rohranbohrarmatur ist eine Dichtung im Bohrstuten denkbar die als eine Kunststoffblende im Bereich der Dichtung bzw. im untersten möglichen Bereich des Bohrstutzens angeordnet ist, die den Bohrstutzen abschliesst und zuerst durchbohrt werden muss. Anschliessend dient die durchbohrte Kunststoffblende als Dichtung am Bohrer bzw. zwischen Bohren und Bohrstutzen, damit kein Medium während des Anbohrens oder danach über den Bohrstutzen austreten kann.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittansicht einer am Hauptrohr befestigten erfindungsgemässen Rohranbohrarmatur und
- Fig. 2: eine Draufsicht einer am Hauptrohr befestigten erfindungsgemässen Rohranbohrarmatur.

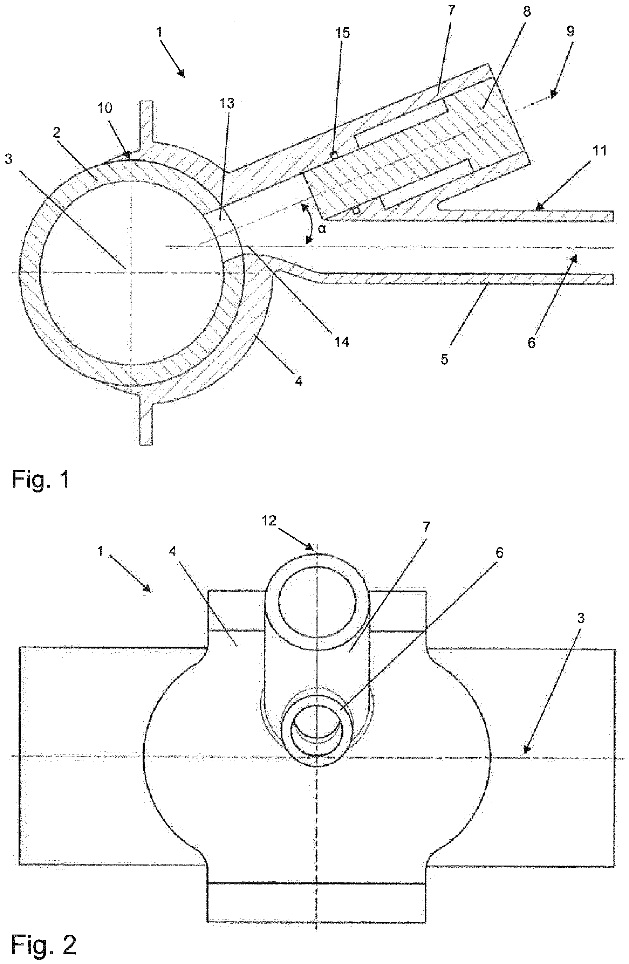

Die in Fig. 1 dargestellte Zeichnung zeigt die erfindungsgemässe Rohranbohrarmatur 1 die am Hauptrohr 2 befestigt bzw. verschweisst ist. Das Hauptrohr 2 dient der Förderung des Mediums und ist vorzugsweise aus Kunststoff hergestellt. Das Hauptrohr 2 weist eine Mittelachse 3 auf. Die Rohranbohrarmatur 1 ist über das Sattelstück 4 am Hauptrohr 2 vorzugsweise mittels Heizwicklung (nicht dargestellt) befestigt bzw. verschweisst. Die Rohranbohrarmatur 1 beinhaltet ein Abgangsrohr 5 sowie ein Bohrstutzen 7. Vorzugsweise ist die Rohranbohrarmatur 1 mit Sattelstück 4, Abgangsrohr 5 und Bohrstutzen 7 einteilig ausgebildet. Im Bohrstutzen 7 ist ein Bohrer 8 angeordnet, der sich entlang der Mittelachse 9 des Bohrstutzens 7 verschieben lässt, um die entsprechende Bohrung 13 bzw. Bohrloch 13 im Hauptrohr vorzusehen. Das Abgangsrohr 5 bzw. dessen Mittelachse 6 ist horizontal ausgerichtet und die Mittelachse 6 des Abgangsrohres 5 ist unterhalb dem Scheitelpunkt 10 des Hauptrohres 2 angeordnet. Das Abgangsrohr 5 dient dem Anschliessen einer vom Hauptrohr abgehenden Leitung. Der Scheitelpunkt 10 befindet sich am höchsten Punkt des Aussendurchmessers des Hauptrohres 2 bzw. der Verlauf einer Tangente durch diesen Punkt würde horizontal erfolgen. Durch diese Anordnung des Abgangsrohres 5 bzw. der Rohranbohrarmatur 1 ist gewährleistet, dass das Abgangsrohr 5 direkt in das Hauptrohr 2 eintritt und keine Umlenkung, wie sie aus dem Stand der Technik bekannt ist erfolgt. Dies reduziert den Strömungswiderstand und somit auch den Druckverlust. Durch die Minderung des Durckverlusts aufgrund der Anordnung der Rohranbohrarmatur 1 und dessen Bohrstutzen 7 und Abgangsrohr 5 kann ein kleinerer Bohrdurchmesser bzw. Bohrer 8 eingesetzt werden, wodurch auch die Anbohrkräfte zum Bohren des Bohrlochs 13 im Hauptrohr 2 verringert werden können.

In einer vorteilhaften Ausgestaltung der erfindungsgemässen Rohranbohrarmatur 1 ist die obere Scheitellinie 11 des Abgangsrohres 5, welche sich entlang des Aussenumfangs des Abgangsrohres 5 auf dem höchsten Punkt erstreckt bzw. durch den Scheitelpunkt des Abgangsrohres verläuft, unterhalb des oberen Scheitelpunkts 10 des Hauptrohres 2 angeordnet. Durch diese Anordnung ist gewährleistet, dass das Abgangsrohr 5 nicht über das Hauptrohr 2 hinausragt, womit ungewollte Beschädigungen während der Bauphase vermieden werden können. Die Mittelachse 9 des Bohrstutzens 7 verläuft senkrecht auf die Mittelachse 3 des Hauptrohres 2, dies ermöglicht ein optimales Aufbohren des Hauptrohres 2 wodurch der Bohrer 8 rechtwinklig auf die Aussenfläche des Hauptrohres 2 trifft. Der Bohrstutzen 7 bzw. die Mittelachse 9 des Bohrstutzens 7 ist in einem Winkel α < 90° zur Mittelachse 3 des Hauptrohres 2 geneigt, wobei die Mittelachsen 6, 9 auf derselben Ebene 12 angeordnet sind, was aus Fig. 2 gut ersichtlich ist. Die Ebene 12 verläuft rechtwinklig zur Mittelachse 3 des Hauptrohrs 2 bzw. die Mittelachse 3 des Hauptrohres 2 verläuft senkrecht durch die Ebene 12.

Aus Fig. 1 ist gut zu erkennen, dass die Mittelachse 6 des Abgangsrohres 5, welches horizontal verläuft durch das Bohrloch 13 verläuft, welches mit dem im Bohrstutzen 7 verschiebbaren Bohrer 8 gebohrt wird. Im Sattelstück 4 bzw. in der Rohranbohrarmatur 1 ist eine Bohröffnung 14 vorgesehen die dem Durchmesser des Bohrers 8 entspricht oder etwas grösser ausgebildet ist, selbstverständlich verläuft die Mittelachse 6 des Abgangsrohres 5 auch durch die Bohröffnung 14. Die Mittelachsen 6, 9 des Bohrstutzens 7 und des Abgangsrohres 5 liegen wie bereits erwähnt auf der Ebene 12 und kreuzen sich im Bereich des Innendurchmessers des Hauptrohres 2, was in Fig. 1 gut erkennbar ist. Um die Dichtheit der Rohranbohrarmatur 1 zu gewährleisten, ist vorzugsweise im Bohrstutzen 7 am Innendurchmesser eine Dichtung 15 angeordnet. Die Dichtung 15 stellt sicher, dass kein Medium während des Anbohrens über den Bohrstutzen 7 oder auch nach dem Anbohren nach aussen dringt. Alternativ kann auch eine Kunststoffblende (nicht dargestellt) im Bohrstutzen 7 vorgesehen werden, die dann mittels Bohrer 8 durchbohrt werden muss und dann eine Dichtung zum Abdichten der Rohranbohrarmatur 1 bildet, vorzugsweise ist die Kunststoffblende im Bereich der Dichtung bzw. näher am Hauptrohr angeordnet und verschliesst bis zur Durchbohrung den Bohrstutzen 7.

### Bezugszeichenliste

- 1: Rohranbohrarmatur
- 2: Hauptrohr
- 3: Mittelachse Hauptrohr
- 4: Sattelstück
- 5: Abgangsrohr
- 6: Mittelachse Abgangsstück
- 7: Bohrstutzen
- 8: Bohrer
- 9: Mittelachse Bohrstutzen
- 10: Oberer Scheitelpunkt Hauptrohr
- 11: Obere Scheitellinie Abgangsrohr
- 12: Ebene
- 13: Bohrloch
- 14: Bohreröffnung
- 15: Dichtung
- α: Winkel Mittelachse Bohrstutzen / Mittelachse Abgangsrohr

## Patentansprüche

1. Rohranbohrarmatur (1) für ein Medium förderndes Hauptrohr (2) vorzugsweise aus Kunststoff mit einer Mittelachse (3), wobei die Rohranbohrarmatur (1) an einem Hauptrohr (2) angeordnet ist, beinhaltend ein Sattelstück (4), ein Abgangsrohr (5), wobei das Abgangsrohr (5) eine Mittelachse (6) aufweist, einen Bohrstutzen (7), wobei im Bohrstutzen (7) ein Bohrer (8) vorzugsweise mit Gewinde zum Anbohren des Hauptrohres (2) verschiebbar angeordnet ist und der Bohrstutzen (7) eine Mittelachse (9) aufweist, **dadurch gekennzeichnet, dass** die Mittelachse (6) des Abgangsrohres (5) horizontal und durch das vom Bohrer (8) im Hauptrohr durchbohrte Bohrloch (13) verläuft und unterhalb des oberen Scheitelpunkts (10) des Hauptrohres (2) angeordnet ist, wobei das Abgangsrohr direkt ohne Umlenkung in das Hauptrohr eintritt bzw. anschliesst, wobei die Mittelachse (9) des Bohrstutzens (7) senkrecht auf die Mittelachse (3) des Hauptrohres (2) ausgerichtet ist, bzw. die Mittelachse (9) des Bohrstutzens (7) die Mittelachse (3) des Hauptrohres (2) im rechten Winkel schneidet.

2. Rohranbohrarmatur (1) nach Anspruch 1, **dadurch gekennzeichnet, dass** die obere Scheitellinie (11) des Abgangsrohres (5) unterhalb des oberen Scheitelpunkts (10) des Hauptrohres (2) angeordnet ist.

3. Rohranbohrarmatur (1) nach einem der Ansprüche 1 oder 2, **dadurch gekennzeichnet, dass** die Mittelachse (3) des Bohrstutzens (7) in einem Winkels α < 90° zur Mittelachse (6) des Abgangsrohres (5) angeordnet ist.

4. Rohranbohrarmatur (1) nach einem der Ansprüche 1 bis 3, **dadurch gekennzeichnet, dass** die Mittelachse (6, 9) des Bohrstutzens (7) und des Abgangsrohrs (5) auf einer Ebene (12) angeordnet sind, wobei die Ebene (12) rechtwinklig zur Mittelachse (3) des Hauptrohres angeordnet ist.

5. Rohranbohrarmatur (1) nach einem der Ansprüche 1 bis 4, **dadurch gekennzeichnet, dass** das Sattelstück (4) eine Bohreröffnung (14) aufweist, die vorzugsweise dem Bohrduchrmesser des Bohrers (8) entspricht, wobei die Mittelachse (6) des Abgangsrohres (5) durch die Bohröffnung (14) verläuft.

6. Rohranbohrarmatur (1) nach einem der Ansprüche 1 bis 5, **dadurch gekennzeichnet, dass** die Mittelachsen (6, 9) des Bohrstutzens (7) und des Abgangsrohres (5) auf einer Ebene (12) verlaufen und sich im Bereich des Innendurchmessers des Hauptrohres (2) schneiden.

7. Rohrbohrarmatur (1) nach einem der Ansprüche 1 bis 6, **dadurch gekennzeichnet, dass** die Dichtheit während des Anbohrens im Bohrstutzen (7) über eine Dichtung (15) sichergestellt ist, wobei die Dichtung (15) am Innendurchmesser des Bohrstutzens (7) angeordnet ist, vorzugsweise ist die Dichtung (15) als O-Ring oder Profildichtung ausgebildet.

8. Rohrarmatur (1) nach Anspruch 7, **dadurch gekennzeichnet, dass** die Dichtung (15) als Kunststoffblende ausgebildet ist, die vor dem Durchbohren den Bohrstutzen (7) verschliesst und danach als Dichtung (15) zwischen Bohrstutzen (7) und Bohrer (8) dient.

## Claims

1. Pipe tapping saddle (1) for a main pipe (2) conveying a medium, which is preferably made from plastic and has a centre axis (3), wherein the pipe tapping saddle (1) is arranged on a main pipe (2), containing a saddle piece (4), a branch pipe (5), the branch pipe (5) having a centre axis (6), a drill socket (7), a drill (8), preferably with a thread, being arranged displaceably in the drill socket (7) for tapping the main pipe (2) and the drill socket (7) having a centre axis (9), **characterized in that** the centre axis (6) of the branch pipe (5) extends horizontally and through the borehole (13) drilled through the main pipe by the drill (8) and is arranged below the upper crown point (10) of the main pipe (2), wherein the branch pipe is connected to or enters the main pipe directly without any deviation, wherein the centre axis (9) of the drill socket (7) is oriented perpendicularly to the centre axis (3) of the main pipe (2) and the centre axis (9) of the drill socket (7) intersects the centre axis (3) of the main pipe (2) at right angles.

2. Pipe tapping saddle (1) according to Claim 1, **characterized in that** the upper crown line (11) of the branch pipe (5) is arranged below the upper crown point (10) of the main pipe (2).

3. Pipe tapping saddle (1) according to either of Claims 1 and 2, **characterized in that** the centre axis (3) of the drill socket (7) is arranged at an angle α < 90° to the centre axis (6) of the branch pipe (5).

4. Pipe tapping saddle (1) according to one of Claims 1 to 3, **characterized in that** the centre axes (6, 9) of the drill socket (7) and the branch pipe (5) are arranged on a plane (12), wherein the plane (12) is arranged at right angles to the centre axis (3) of the main pipe.

5. Pipe tapping saddle (1) according to one of Claims 1 to 4, **characterized in that** the saddle piece (4) has a drill opening (14) which preferably corresponds to the drilling diameter of the drill (8), wherein the centre axis (6) of the branch pipe (5) extends through the drill opening (14).

6. Pipe tapping saddle (1) according to one of Claims 1 to 5, **characterized in that** the centre axes (6, 9) of the drill socket (7) and the branch pipe (5) extend within a plane (12) and intersect in the region of the internal diameter of the main pipe (2).

7. Pipe tapping saddle (1) according to one of Claims 1 to 6, **characterized in that** the sealing during the tapping is ensured in the drill socket (7) by means of a seal (15), wherein the seal (15) is arranged on the internal diameter of the drill socket (7), and the seal (15) is preferably designed as an O-ring or profile seal.

8. Pipe tapping saddle (1) according to Claim 7, **characterized in that** the seal (15) is designed as a plastic diaphragm which closes off the drill socket (7) before drilling through and afterwards serves as a seal (15) between the drill socket (7) and the drill (8).

## Revendications

1. Raccord de perçage de tube (1) pour un tube principal (2) acheminant un fluide, de préférence en matière plastique avec un axe central (3), le raccord de perçage de tube (1) étant agencé sur un tube principal (2), comprenant une pièce de selle (4), un tube de sortie (5), le tube de sortie (5) présentant un axe central (6), une tubulure de perçage (7), un foret (8), de préférence fileté, étant agencé de manière coulissante dans la tubulure de perçage (7) pour percer le tube principal (2), et la tubulure de perçage (7) présentant un axe central (9), **caractérisé en ce que** l'axe central (6) du tube de sortie (5) s'étend horizontalement et à travers le trou de perçage (13) percé par le foret (8) dans le tube principal et est agencé en dessous du sommet supérieur (10) du tube principal (2), le tube de sortie entrant ou étant raccordé directement dans le tube principal sans déviation, l'axe central (9) de la tubulure de perçage (7) étant orienté perpendiculairement à l'axe central (3) du tube principal (2), ou l'axe central (9) de la tubulure de perçage (7) coupant à angle droit l'axe central (3) du tube principal (2).

2. Raccord de perçage de tube (1) selon la revendication 1, **caractérisé en ce que** la ligne de sommet supérieure (11) du tube de sortie (5) est agencée en dessous du sommet supérieur (10) du tube principal (2).

3. Raccord de perçage de tube (1) selon l'une quelconque des revendications 1 ou 2, **caractérisé en ce que** l'axe central (3) de la tubulure de perçage (7) est agencé à un angle α < 90° par rapport à l'axe central (6) du tube de sortie (5).

4. Raccord de perçage de tube (1) selon l'une quelconque des revendications 1 à 3, **caractérisé en ce que** les axes centraux (6, 9) de la tubulure de perçage (7) et du tube de sortie (5) sont agencés sur un plan (12), le plan (12) étant agencé à angle droit de l'axe central (3) du tube principal.

5. Raccord de perçage de tube (1) selon l'une quelconque des revendications 1 à 4, **caractérisé en ce que** la pièce de selle (4) présente une ouverture de foret (14), qui correspond de préférence au diamètre de perçage du foret (8), l'axe central (6) du tube de sortie (5) passant par l'ouverture de perçage (14).

6. Raccord de perçage de tube (1) selon l'une quelconque des revendications 1 à 5, **caractérisé en ce que** les axes centraux (6, 9) de la tubulure de perçage (7) et du tube de sortie (5) s'étendent sur un plan (12) et se coupent dans la zone du diamètre intérieur du tube principal (2).

7. Raccord de perçage de tube (1) selon l'une quelconque des revendications 1 à 6, **caractérisé en ce que** l'étanchéité est assurée pendant le perçage dans la tubulure de perçage (7) par un joint d'étanchéité (15), le joint d'étanchéité (15) étant agencé sur le diamètre intérieur de la tubulure de perçage (7), le joint d'étanchéité (15) étant de préférence configuré sous forme de joint torique ou de joint d'étanchéité profilé.

8. Raccord de perçage de tube (1) selon la revendication 7, **caractérisé en ce que** le joint d'étanchéité (15) est configuré sous forme de diaphragme en matière plastique, qui ferme la tubulure de perçage (7) avant le perçage et qui sert ensuite de joint d'étanchéité (15) entre la tubulure de perçage (7) et le foret (8).
